# EUROPÄISCHE PATENTSCHRIFT

(11) **EP 3 507 033 B1**
(45) Veröffentlichungstag und Bekanntmachung des Hinweises auf die Patenterteilung: **23.09.2020**
(21) Anmeldenummer: 17778162.2
(22) Anmeldetag: 30.08.2017
(51) Int. Cl.: B21D 5/00, B21D 5/02, B21D 55/00, G06T 1/00, G06T 7/00

(54) **BIEGEMASCHINE MIT EINER ARBEITSBEREICHBILDERFASSUNGSVORRICHTUNG UND VERFAHREN ZUR VERBESSERUNG DER BEDIENERSICHERHEIT EINER BIEGEMASCHINE**
BENDING MACHINE HAVING A WORKING AREA IMAGE CAPTURING APPARATUS AND METHOD FOR IMPROVING THE OPERATIONAL SAFETY OF A BENDING MACHINE
MACHINE À CINTRER MUNIE D'UN DISPOSITIF D'ENREGISTREMENT D'IMAGES DE LA ZONE DE TRAVAIL ET PROCÉDÉ POUR AMÉLIORER LA SÉCURITÉ D'UTILISATION D'UNE MACHINE À CINTRER

(30) Priorität: 02.09.2016 AT 507842016
(43) Veröffentlichungstag der Anmeldung: 10.07.2019
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); STEININGER, Verena, 4020 Linz (AT); THEIS, Helmut, 4540 Pfarrkirchen (AT); WALDHERR, Manfred, 4040 Linz (AT)
(74) Vertreter: Burger, Hannes
(86) Internationale Anmeldenummer: PCT/AT2017/060212
(87) Internationale Veröffentlichungsnummer: WO 2018/039696

(56) Entgegenhaltungen:
- DE-A1-102010 016 646
- JP-A- 2004 017 072
- JP-A- 2006 297 469

## Beschreibung

Die Erfindung betrifft eine Biegemaschine mit einer Arbeitsbereich-Bilderfassungsvorrichtung.

Der Arbeits- bzw. Sichtbereich eines Maschinenbedieners einer Biegemaschine, im Speziellen einer Freibiegemaschine, wird konstruktionsbedingt vom Maschinentisch und vor allem vom Pressbalken dominiert. Insbesondere schränkt der Pressbalken, mit den darin angeordneten Biegewerkzeugen, den Blick in das Maschineninnere, wo sich die Hinteranschlagvorrichtung mit den Anschlagfingern befindet, zumeist stark ein. Ferner ist es üblich, am Pressbalken mehrere unterschiedliche Arten von Biegewerkzeugen anzuordnen, um somit längs des Pressbalkens unterschiedliche Biegeumformungen durchführen zu können. Dazu muss der Maschinenbediener das umzuformende Werkstück in der richtigen Reihenfolge und jeweils korrekt ausgerichtet, den Biegewerkzeugen zuführen.

Wird eine Biegemaschine zur Serienproduktion einer größeren Stückzahl gleich zu bearbeitender Werkstücke verwendet, ist der Maschinenbediener mit den einzelnen Arbeitsschritten bereits gut vertraut und wird somit die Bedienhandlungen, insbesondere das korrekt ausgerichtete Zuführen des Werkstücks, zuverlässig ausführen. Bei kleineren in Serie zu fertigenden Stückzahlen, insbesondere bei einer Stückzahl die gegen eins geht, fehlt einem Maschinenbediener die nötige Routine, was die Gefahr birgt, dass insbesondere bei komplexen Biegeteilen, ein Werkstück fehlerhaft gebogen wird. Da ein Maschinenbediener teilweise beinahe gleichzeitig, verschiedenste Aktionen koordinieren und überwachen muss, insbesondere eine korrekte Ausrichtung an der richtigen Biegestation und ein korrektes Anliegen des Werkstücks am Hinteranschlag, wird dadurch ein unnötiger hoher Stresspegel hervorgerufen. Da insbesondere der Hinteranschlag aufgrund konstruktiver Gegebenheiten der Biegemaschine zumeist nicht direkt einsehbar ist, muss sich der Maschinenbediener bücken, um beim Einlegen des Werkstücks das Anliegen am Hinteranschlag prüfen zu können, was neben einer körperlichen Mehrbelastung, aufgrund der scharfkantigen metallischen Blechteile ein Verletzungsrisiko birgt.

Vom Maschinenbediener werden bei der bestimmungsgemäßen Bedienung einer Biegemaschine Kontroll- und Überwachungsaufgaben gefordert, die eine weitestgehend zeitgleiche Aufmerksamkeit an teilweise räumlich weit voneinander distanzierten Orten erforderlich macht. Gleichzeitig ist es erforderlich, dass teilweise komplexe Ausrichtvorgänge des umzuformenden Werkstücks beachtet werden müssen.

Beispielsweise offenbart die EP 2 590 040 B1 eine Biegemaschine, bei der am Pressbalken zwei Kameras angeordnet sind, welche den vorderen Arbeitsbereich der Biegemaschine erfassen, insbesondere ein eingelegtes umzuformendes Werkstück, und wobei nach Ermitteln der Ausrichtung des Werkstücks, von einem Projektor eine Ausrichtinformation auf das Werkstück projiziert wird. Die beiden Kameras sind dabei in den Endbereichen des Pressbalkens und vor dem Pressbalken angeordnet. Eine Anordnung von Elementen wie einer Kamera bzw. eines Projektors vor dem Pressbalken hat jedoch noch einen weiteren entscheidenden Nachteil, dass für derart angeordnete Objekte ein großes Beschädigungsrisiko besteht. Blechteile werden oftmals mittels eines Hallenkrans zur Biegemaschine zugeführt, was leicht zu Beschädigungen von vor dem Pressbalken angeordneten Vorrichtungen führen kann. Auch kann das sich aufbiegende Blech am Pressbalken anschlagen und dort angebrachte Vorrichtungen beschädigen.

Aus der JP 5856860 B2 ist eine Blech-Einleghilfe bekannt, bei der eine Kamera im Maschinenraum auf den Hinteranschlag und das eingelegte Blech gerichtet ist. Im erfassten Abbild wird eine Blechkante oder ein markanter Punkt des Bleches ermittelt und mit einer Sollposition verglichen. Bei einer Abweichung wird von einem Projektor eine Markierung auf das Blech projiziert, auf die das Blech in Bezug zum Hinteranschlag ausgerichtet werden muss. Die Kamera und der Projektor sind an einer Vorrichtung angebracht, welche parallel zum Pressbalken bewegbar ist.

Aus dem Stand der Technik ist bekannt, den Bereich vor einer Biegemaschine, und auch den Bereich hinter dem Pressbalken mit einem Bilderfassungsmittel aufzunehmen. Es ist offenbart, dass das erfasste Abbild an einem Anzeigemittel dargestellt wird, wobei eine Korrektur der Darstellung aufgrund sich ändernder Positionsverhältnisse zwischen Bediener, Biegemaschine, umzuformendem Werkstück und Arbeitsposition nicht erfolgt. Der Maschinenbediener bekommt also unabhängig von seiner aktuellen Position stets dieselbe perspektivische Darstellung angezeigt. Dies steigert wiederum das Fehlerrisiko, da der Benutzer wieder seine Position mit seiner Blickrichtung und dem dargestellten Abbild abstimmen muss um die dargestellte Situation korrekt erfassen zu können. Gerade bei breiten Biegemaschinen (einige Meter langer Pressbalken) können deutliche perspektivische Verzerrungen entstehen. JP 2004017072, die als der nächstliegende Stand der Technik für die unabhängigen Ansprüche 1 und 14 betrachtet wird, offenbart eine Biegemaschine mit einer Arbeitsbereich-Bilderfassungsvorrichtung.

Die Aufgabe der Erfindung liegt also darin, die Nachteile des Standes der Technik zu verbessern und eine Biegemaschine zu schaffen, bei dem einen Maschinenbediener im Arbeitsbereich vor der Biegemaschine stets ein quasi ungehinderter Durchblick auf den hinteren Maschinenraum bereitgestellt wird, ohne dass der Maschinenbediener selbst die Darstellung erneut interpretieren muss.

Die Aufgabe der Erfindung wird gelöst durch eine Biegemaschine mit einer Arbeitsbereich-Bilderfassungsvorrichtung. Die Biegemaschine weist einen Maschinenrahmen, einen längserstreckten, feststehenden Maschinentisch und einen längserstreckten Pressbalken auf, welcher Pressbalken im Maschinenrahmen geführt und von einem Antriebsmittel relativ zu diesem beweglich aufgenommen ist, und wobei das Antriebsmittel von einer Maschinensteuerung angesteuert wird. Der Maschinenrahmen weist ferner zwei Seitenteile auf, welche in Richtung der Längserstreckung des Maschinentisches durch eine Maschinenbreite voneinander distanziert sind, und wobei die Längserstreckung und die Bewegungsrichtung des Pressbalkens eine Arbeitsebene aufspannen. Die Arbeitsebene legt einen vorderen Arbeits- und Manipulationsraum und einen davon abgegrenzten, und insbesondere abgeschlossenen, hinteren Maschinenraum fest. Im Maschinenraum oberhalb des Maschinentisches ist eine Bilderfassungsvorrichtung angeordnet, wobei ein Erfassungsbereich der Bilderfassungsvorrichtung in Richtung des Maschineninnenraums ausgerichtet ist. Die Bilderfassungsvorrichtung ist mit einem Anzeigemittel verbunden, welches zur Darstellung des erfassten Abbilds des Erfassungsbereichs ausgebildet ist. Die Bilderfassungsvorrichtung ist über einen Bildverarbeitungsprozessor mit dem Anzeigemittel verbunden, ferner weist der Bildverarbeitungsprozessor ein Koordinatentransformations-Modul auf, welches zur Korrektur der Perspektive des erfassten Abbilds ausgebildet ist. Das Koordinatentransformations-Modul ist mit einem drahtlosen Positionsermittlungssystem verbunden, welches dazu ausgebildet ist, die Position eines Maschinenbedieners im Arbeits- und Manipulationsraum zu ermitteln.

Der Vorteil der gegenständlichen Ausführung liegt darin, dass der Maschinenbediener ohne körperliche Verrenkungen den hinteren, abgeschlossenen Maschinenraum einsehen kann, wobei die Darstellung an die aktuelle Position des Maschinenbedieners angepasst wird. Somit hat der Maschinenbediener von jeder Position im Bereich vor der Maschine einen perspektivisch korrekten Blick auf den auch auf den Maschineninnenraum

Eine Weiterbildung besteht darin, dass die Bilderfassungsvorrichtung durch zumindest eine 2D- oder eine 3D-Kamera gebildet ist, beispielsweise durch eine CCD-Kamera. Dies ist von Vorteil, da solche Kameras gut und kostengünstig verfügbar sind.

Nach einer Weiterbildung ist auch vorgesehen, dass das Positionsermittlungssystem einen vom Maschinenbediener mitgeführten Mobilteil und eine an der Biegemaschine angeordnete erste Gegenstelle aufweist, wobei zwischen dem Mobilteil und der ersten Gegenstelle eine drahtlose Hochfrequenz-Kommunikationsverbindung besteht, und dass die Biegemaschine zumindest eine zweite Gegenstelle aufweist, wobei zwischen dem Mobilteil und der zumindest einen weiten Gegenstelle eine drahtlose Ultraschall-Signalverbindung besteht. Die Position des Maschinenbedieners in Relation zur Biegemaschine ist somit jederzeit ermittelbar, sodass auch die perspektivische Korrektur der Anzeige im Wesentlichen in Echtzeit erfolgen kann. Ein Beispiel für ein anspruchsgemäßes Positionsortungssystem ist aus der AT 510 950 A2 bekannt.

Eine Weiterbildung besteht darin, dass die Bilderfassungsvorrichtung in einem Mittenabschnitt der Längserstreckung des Pressbalkens, oder im Bereich zumindest eines der Seitenteile angeordnet ist. Im Mittenabschnitt des Pressbalkens ist aufgrund der zentralen Position, ein besonders guter Blick auf den Maschineninnenraum gegeben. Im Bereich der Seitenteile kann die Bilderfassungsvorrichtung besonders gut geschützt angeordnet werden.

Möglich ist auch eine Weiterbildung, nach der in einem Speichermittel des Bildverarbeitungsprozessors, oder in einem, mit dem Bildverarbeitungsprozessor verbundenem externen Speichermittel, ein grafisches Modell der Biegemaschine hinterlegt ist, welches der Bildverarbeitungsprozessor am Anzeigemittel dem erfassten Abbild überlagert darstellt. Somit ist es möglich, relevante Komponenten der Biegemaschine in der Darstellung am Anzeigemittel darzustellen, ohne dass dafür im von der Bilderfassungsvorrichtung erfassten Abbild eine Bildanalyse durchgeführt werden müsste. Durch Kenntnis der Anordnung der Bilderfassungsvorrichtung in Bezug zur Biegemaschine, und der optischen Kenndaten der Bilderfassungsvorrichtung, können mittels einer Koordinatentransformation Elemente aus dem hinterlegten Modell der Biegemaschine, in die Darstellung am Anzeigemittel eingeblendet werden. Der externe Speicher kann bspw. durch eine zentrale Datenbank gebildet sein.

Nach einer Weiterbildung kann auch vorgesehen sein, dass im Arbeits- und Manipulationsraum eine, mit dem Bildverarbeitungsprozessor verbundene, weitere Bilderfassungsvorrichtung angeordnet ist, welche einen Erfassungsbereich aufweist, der auf den Bereich der Kopfhöhe eines Maschinenbedieners ausgerichtet ist, und wobei die weitere Bilderfassungsvorrichtung mit einem Gesichtsfindungsmodul des Bildverarbeitungsprozessors verbunden ist. Dadurch kann die genaue Höhe der Augen des Bedieners ermittelt werden und somit die perspektivische Darstellung am Anzeigemittel sehr genau an das tatsächliche Sehfeld des Bedieners angepasst werden. Für den Bediener ergibt sich somit eine Darstellung, als ob die Biegemaschine, insbesondere der Pressbalken, transparent wäre.

Eine Weiterbildung besteht auch darin, dass das Anzeigemittel durch einen Projektor gebildet ist, wobei der Projektionsbereich auf eine Vorderseite der Biegemaschine ausgerichtet ist, insbesondere auf den Pressbalken bzw. eine Verkleidung des Pressbalkens. Diese Weiterbildung nutzt in vorteilhafter Weise vorhandene Flächen der Biegemaschine als Projektionsfläche. Da diese meistens weitestgehend vertikal ausgerichtet sind, und der Blick des Bedieners zumeist auch auf die Biegemaschine ausgerichtet ist, befindet sich das Anzeigemittel somit recht gut im direkten Blickfeld des Bedieners. In einer alternativen Ausführung ist es auch möglich, dass der Projektionsbereich auf einen Abschnitt der Oberfläche des umzuformenden Bleches ausgerichtet ist. Diese Ausführung hat den Vorteil, dass sich der Projektionsbereich im Bereich der Hauptaufmerksamkeit des Maschinenbedieners befindet. Beim Biegen wird der Maschinenbediener zumeist das umzuformende Blech und die Biegelinie bzw. die herunterfahrenden Biegewerkzeuge im Aufmerksamkeitsbereich haben. Da sich nun die Projektionsfläche in diesem Bereich befindet, wird der Bediener durch betrachten der projizierten Information von seiner Arbeite nicht oder nur sehr gering abgelenkt.

Eine vorteilhafte Weiterbildung besteht auch darin, dass das Anzeigemittel durch eine Datenbrille gebildet ist. Aufgrund der Anordnung der Brille am Kopf und genau im Sehfeld des Trägers, ist gewährleistet, dass der Maschinenbediener relevante Information genau in sein Blickfeld eingeblendet bekommt, unabhängig von der aktuellen Blickrichtung.

Dahingehend ist eine weitere mögliche Ausführung von Vorteil, nach der der Mobilteil durch die Datenbrille gebildet ist. Da mittels der Datenbrille nun die Position des Bedieners ermittelt wird, kann die Darstellung sehr gut perspektivisch korrigiert werden. In einer Weiterbildung kann vorgesehen sein, dass die Datenbrille nur auch eine Ausrichtung des Kopfes ermittelt, sodass nur dann eine Darstellung eingeblendet wird, wenn der Bediener seinen Blick auf die Biegemaschine richtet.

Eine weitere vorteilhafte Ausführung besteht darin, dass die Bilderfassungsvorrichtung auf einer Manipulationsvorrichtung angeordnet ist, welche zur Veränderung der Position der Bilderfassungsvorrichtung parallel zur Längserstreckung ausgebildet ist und/oder zur Verschwenkung der Bilderfassungsvorrichtung um eine vertikale und/oder horizontale Achse ausgebildet ist. Somit wird es möglich, die Bilderfassungsvorrichtung näher zu dem Bereich der Biegemaschine zu bewegen, von dem ein Abbild erfasst werden soll. Beispielsweise kann eine Biegemaschine eine Breite von mehreren Metern aufweisen, wodurch die relative Auflösung in den von der Bilderfassungsvorrichtung am weitesten entfernten Abschnitten sinkt. Durch eine Veränderung der Anordnung der Bilderfassungsvorrichtung kann eine ungünstige Aufnahmesituation verbessert werden.

Gemäß einer Weiterbildung ist vorgesehen, dass das drahtlose Positionsermittlungssystem einen Beschleunigungssensor, oder eine kontaktlos auslesbare Erkennungsmarke aufweist. Mit einem Beschleunigungssensor können Ortsveränderungen und Bewegungen gut erfasst werden, insbesondere auch mit einer hohen Auflösung. Mit einem Beschleunigungssensor können jedoch nur Differenzbewegungen und damit nur relative Positionsveränderungen ermittelt werden, daher sind regelmäßige Kalibrierungen zur Festlegung eines Referenzpunkts erforderlich. Eine Erkennungsmarke, bspw. ein RFID-Tag, kann durch Auslegung der Impulsantwort des Tags derart ausgestaltet sein, dass über eine Laufzeitmessung der Antwort des Tags, eine sehr genaue Positionsermittlung erreichbar ist.

Eine Weiterbildung sieht auch vor, dass das Anzeigemittel durch einen Flachbildschirm gebildet ist, welcher am Pressbalken angeordnet ist, insbesondere an der Vorderseite. Aufgrund der geringen Tiefe und des geringen Gewichts, kann ein Flachbildschirm leicht im Sichtbereich des Bedieners angebracht werden. Auch erreicht ein Flachbildschirm eine Helligkeit des dargestellten Bildes, dass dieses auch bei Tageslicht in einer Produktionshalle gut zu erkennen ist. Diese Weiterbildung schließt ausdrücklich eine Ausführungsvariante mit ein, bei der das Anzeigemittel auch durch mehr als einen Flachbildschirm gebildet ist. Abhängig von der Maschinenbreite sind Ausführungen denkbar, bei denen entlang des Pressbalkens, mehrere Flachbildschirme angeordnet sind und insgesamt das Anzeigemittel bilden.

Eine weitere vorteilhafte Ausführung besteht auch darin, dass der der Flachbildschirm in einer Montagevorrichtung angeordnet ist, welche Montagevorrichtung eine Positionierung des Flachbildschirms entlang der Längserstreckung des Pressbalkens ermöglicht. Eine Biegepresse weist zumeist eine große Längserstreckung auf, sodass eine zentrale Positionierung der Anzeige nur für Biegearbeiten im Mittenbereich der Biegepresse vorteilhaft ist. Mit dieser Weiterbildung kann der Flachbildschirm entlang der Biegepresse bewegt werden und insbesondere im unmittelbaren Nahbereich der durchzuführenden Biegeumformung positioniert werden. Eine weitere Ausführung kann auch darin bestehen, dass die Positionierung mittels eines Stellmittels erfolgt, sodass vom Maschinenbediener keine Handlung erforderlich ist. Die Anzeige wird dann von der Maschinensteuerung an den Ort der jeweils nächsten Biegeumformung bewegt.

Unter Flachbildschirm wird bevorzugt eine aktive, selbstleuchtende Anzeige verstanden, bspw. ein TFT-Display oder ein OLED-Display. Es können jedoch auch passive Anzeigen verwendet werden, bspw. ein ePaper-Display. Dieses hat den Vorteil, dass auch bei sehr hellem Umgebungslicht, ein Ablesen problemlos möglich ist.

Die Aufgabe der Erfindung wird auch durch ein Verfahren zur Verbesserung der Bediensicherheit einer Biegemaschine gelöst, welches Verfahren auf einer Biegemaschine ausgeführt wird. In Echtzeit wird von der Bilderfassungsvorrichtung ein hinteres Abbild des Maschinenraums erfasst, und vom Positionsermittlungssystem die Koordinaten eines Maschinenbedieners im Arbeits- und Manipulationsraum ermittelt. Vom Koordinatentransformations-Modul wird ein Transformationsvektor zwischen der Bilderfassungsvorrichtung und den Koordinaten des Maschinenbedieners ermittelt wird, und vom Bildverarbeitungsprozessor das erfasste Abbild unter Anwendung des Transformationsvektors perspektivisch transformiert, und das transformierte Bild am Anzeigemittel dargestellt.

Der besondere Vorteil dieses Verfahrens liegt darin, dass der Bediener in Echtzeit eine perspektivisch richtige Darstellung des nur unter körperlichen Verrenkungen einsehbaren Maschinenraums dargestellt bekommt.

Nach einer Weiterbildung wird von der weiteren Bilderfassungsvorrichtung vorderes Abbild erfasst wird, in welchem vorderen Abbild vom Gesichtsfindungsmodul das Gesicht des Bedieners ermittelt wird, insbesondere die Position der Augen. Durch Kenntnis der Position der Augen kann die Position des Bedieners vor der Biegemaschine genauer ermittelt werden und somit auch die perspektivische Korrektur der Abstand der Augen vom Boden ermittelt werden, und so eine deutliche Verbesserung der perspektivischen Korrektur erreicht werden.

Eine mögliche Weiterbildung besteht auch darin, dass vom Koordinatentransformations-Modul aus der Position der Augen ein Blickrichtungsvektor ermittelt wird, welcher vom Bildverarbeitungsprozessor zusammen mit dem Transformationsvektor zur perspektivischen Transformation verwendet wird. Aufgrund der Kenntnis der Position des Bedieners vor der Biegemaschine und der Kenntnis der Augen, kann mithilfe des Blickrichtungsvektor die Darstellung am Anzeigemittel an die genaue Blickperspektive des Bedieners angepasst werden.

Eine weitere vorteilhafte Ausbildung besteht darin, dass vom Koordinatentransformations-Modul aus der Position der Augen und einer Anordnungsposition des weiteren Bilderfassungsmittels, ein Vertikalabstand zwischen Boden und Augenposition ermittelt wird, welcher vom Bildverarbeitungsprozessor zusammen mit dem Transformationsvektor zur perspektivischen Transformation verwendet wird.

Je genauer die Blickrichtung und damit der Sehbereich des Bedieners ermittelt werden kann, desto genauer kann auch die perspektivische Korrektur durchgeführt werden. Für ein genaues Hantieren des umzuformenden Werkstücks, insbesondere das Anlegen an den Hinteranschlägen, ist es von Bedeutung, den nicht einsehbaren Bereich der Biegemaschine am Anzeigemittel möglichst mit der korrekten Perspektive darzustellen

Eine vorteilhafte weitere Ausführung besteht darin, dass der Bildverarbeitungsprozessor eine im Speichermittel oder im externen Speichermittel hinterlegte Soll-Ausrichtung am Anzeigemittel darstellt und/oder auf einem in der Biegemaschine eingelegten Blech darstellt. Somit kann dem Bediener eine deutliche Hilfe gegeben werden, wie das umzuformende Blech für den nächsten Arbeitsschritt in die Biegemaschine eingelegt werden muss. Gerade bei geringen Stückzahlen kann somit eine deutliche Steigerung des Durchsatzes erreicht werden, da der Bediener nicht mit Überlegungen zur korrekten Ausrichtung des Bleches belastet ist. Insbesondere kann dadurch auch eine Reduktion fehlerhaft gebogener Werkstücke erreicht werden.

Nach einer weiteren Ausbildung ist vorgesehen, dass der Bildverarbeitungsprozessor ein Mustererkennungs-Modul aufweist, welches im vorderen und/oder im hinteren Abbild die Ausrichtung eines eingelegten Bleches als Ist-Ausrichtung erfasst, insbesondere die Umrisse des Bleches, und durch Vergleich mit einer, im Speichermittel oder im externen Speichermittel hinterlegten Soll-Ausrichtung, einen Ausrichtungs-Abweichungsvektor ermittelt, und diesen als Korrekturdarstellung am Anzeigemittel und/oder am eingelegten Blech darstellt. Neben einer reinen Projektion einer Sollausrichtung ist es auch möglich, eine fehlerhafte Ausrichtung des eingelegten Bleches zu erkennen und den Bediener aktiv darauf hinzuweisen. Es könnte bspw. vorgesehen sein, dass eine fehlerhafte Ausrichtung mittels einer Signalfarbe dargestellt wird und mittels grafischer Symbole (Pfeile, Drehrichtungen, ...) eine Angabe von Manipulationsschritten erfolgt, um das Werkstück in die korrekte Ausrichtposition zu bringen.

Eine weitere vorteilhafte Ausführung besteht darin, dass die Korrekturdarstellung vom Bildverarbeitungsprozessor als Animation erzeugt wird. Gerade bei geringen Stückzahlen bzw. beim Start eines neuen Biegeteils steht der Maschinenbediener vor der Herausforderung, das Werkstück zwischen den einzelnen Bearbeitungsschritten entsprechend korrekt auszurichten. Mit dieser Weiterbildung kann der Maschinenbediener im Arbeitsablauf deutlich unterstützt werden, und somit die Gefahr von fehlerhaften Biegeteilen deutlich reduziert werden.

Zum besseren Verständnis der Erfindung wird diese anhand der nachfolgenden Figuren näher erläutert.

Es zeigen jeweils in stark vereinfachter, schematischer Darstellung:
- Fig. 1: die gegenständliche Biegemaschine mit einer ersten Ausführung der gegenständlichen Arbeitsbereich-Bilderfassungsvorrichtung;
- Fig. 2: die gegenständliche Biegemaschine mit einer weiteren möglichen Ausführung der gegenständlichen Arbeitsbereich-Bilderfassungsvorrichtung;
- Fig. 3: eine Draufsicht auf die Arbeitsbereich-Bilderfassungsvorrichtung;
- Fig. 4: eine Darstellung einer Manipulationsanweisung gemäß einer weiteren möglichen Ausführung.

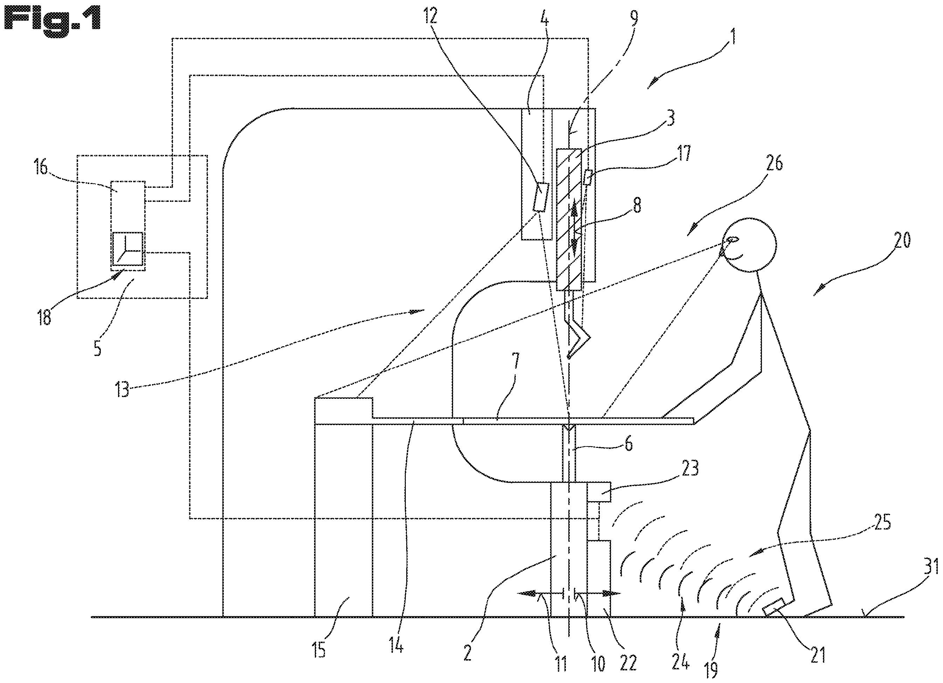

Fig. 1 zeigt die gegenständliche Biegemaschine 1 mit einer Arbeitsbereich-Bilderfassungsvorrichtung in einer Schnittdarstellung. Die Biegemaschine 1 umfasst einen Maschinenrahmen, welcher einen längserstreckten, feststehenden Maschinentisch 2 und einen ebenfalls längserstreckten Pressbalken 3 aufweist. Der Pressbalken ist im Maschinenrahmen geführt und wird von Antriebsmitteln 4 relativ zu diesem bewegt. Das Antriebsmittel 4 wird dabei von einer Maschinensteuerung 5 angesteuert, welche Maschinensteuerung 5 den Pressbalken 3 soweit in Richtung des am Maschinentisch 2 angeordneten Unterwerkzeugs 6 bewegt, bis dass das am Unterwerkzeug 6 aufgelegte Blech 7 um den gewünschten Winkel gebogen wurde.

Die Längserstreckung des Pressbalkens 3 und die Bewegungsrichtung 8 des Pressbalkens 3 spannen eine Arbeitsebene 9 auf, welche einen vorderen Arbeits- und Manipulationsraum 10 und einen davon abgegrenzten hinteren Maschinenraum 11 festlegt. Bedingt durch die konstruktiven Elemente der Biegemaschine 1, insbesondere durch den Pressbalken 3, ist der Maschinenraum 11 nicht, oder nur schwer einsehbar. Insbesondere muss sich der Maschinenbediener bücken, um den Maschinenraum 11 einsehen zu können, was aufgrund von scharfen Kanten des eingelegten Blechs 7, ein deutliches Verletzungsrisiko birgt.

Im Maschinenraum 11 und oberhalb des Maschinentisches 2 ist eine Bilderfassungsvorrichtung 12 angeordnet, welche einen Erfassungsbereich 13 aufweist, der in Richtung des Maschinenraums 11 ausgerichtet ist, insbesondere auf die Anschlagfinger 14 eines im Maschinenraum 11 angeordneten Hinteranschlag 15.

Die Bilderfassungsvorrichtung 12 ist über einen Bildverarbeitungsprozessor 16 mit einem Anzeigemittel 17 verbunden, welches Anzeigemittel 17 zur Darstellung des erfassten Abbilds des Erfassungsbereichs 13 ausgebildet ist. Bevorzugt ist der Bildverarbeitungsprozessor 16 in der Maschinensteuerung 5 angeordnet und weist ferner ein Koordinatentransformations-Modul 18 auf, welches zur Korrektur der Perspektive des erfassten Abbilds des Erfassungsbereichs 13 ausgebildet ist, bevor das erfassten Abbilds am Anzeigemittel 17 dargestellt wird.

Ferner ist vorgesehen, dass das Koordinatentransformations-Modul 18 mit einem drahtlosen Positionsermittlungssystem 19 verbunden ist. Dieses ist dazu ausgebildet ist, die Position eines Maschinenbedieners 20 im vorderen Arbeits- und Manipulationsraum 10 zu bestimmen. Gemäß einer bevorzugten Ausführungsvariante weist das Positionsermittlungssystem 19 einen vom Maschinenbediener 20 mitgeführten Mobilteil 21 und eine an der Biegemaschine 1, bevorzugt am Maschinentisch 2 angeordnete erste Gegenstelle 22 auf. Bevorzugt ist ferner an der Biegemaschine 1 bzw. am Maschinentisch 2 eine zweite Gegenstelle 23 angeordnet, wobei zwischen dem Mobilteil 21 und der ersten Gegenstelle 22 eine drahtlose Hochfrequenz-Kommunikationsverbindung 24 besteht und ferner zwischen dem Mobilteil 21 und der zweiten Gegenstelle 23 eine drahtlose Ultraschall-Signalverbindung 25 besteht. Gemäß einer Ausführungsvariante ist der Mobilteil durch einen Schuh gebildet, welcher neben einer Positionsortung durch das Positionsermittlungssystem 19, auch eine Steuerung der Biegemaschine 1 durch die Maschinensteuerung 5 ermöglicht, insbesondere die Steuerung der Bewegung des Pressbalkens 3.

Durch den herunterfahrenden Pressbalken 3 ist der Sichtbereich 26 des Maschinenbedieners 20 auf den Maschinenraum 11, insbesondere auf die Anschlagfinger 14 eingeschränkt. Mit der gegenständlichen Ausführung wird der Maschinenraum 11 von der Bilderfassungsvorrichtung 12 erfasst und vom bzw. am Anzeigemittel 17 dargestellt. Der Anzeige erfolgt jedoch unter Berücksichtigung der ermittelten Position des Maschinenbedieners 20 perspektivisch korrigiert, sodass dem Maschinenbediener 20 im Wesentlichen von jeder Position im Arbeitsund Manipulationsraum 10, eine perspektivisch korrekte Darstellung des Maschinenraums 11 angezeigt wird. Für den Maschinenbediener 20 ergibt sich somit der Eindruck, dass der herunterfahrende Pressbalken 3 nicht vorhanden bzw. transparent ist, und den Blick in den Maschinenraum 11 nicht beeinträchtigt.

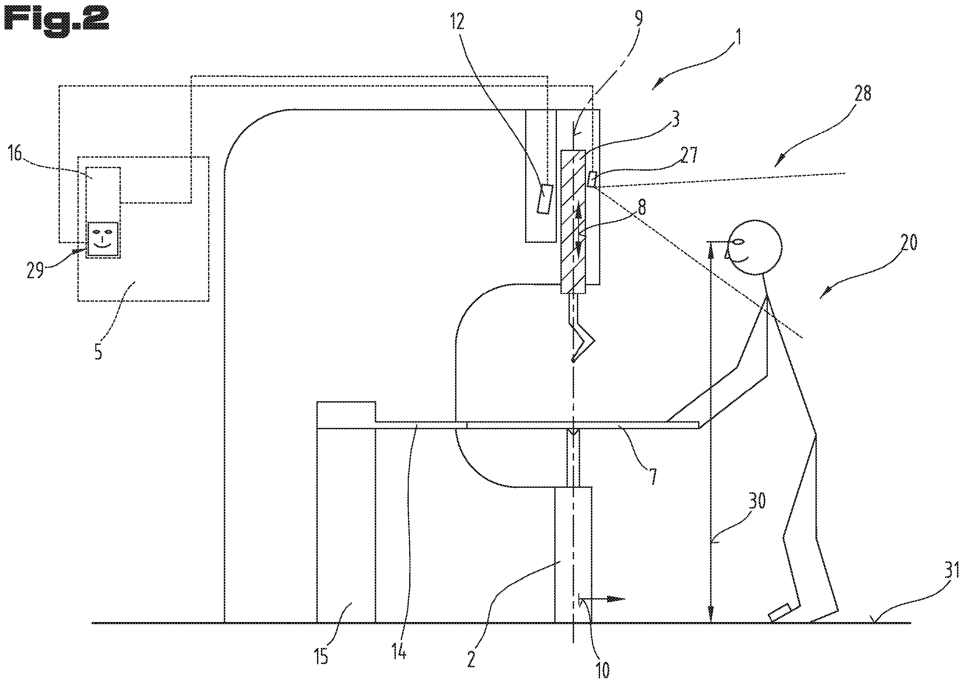

Fig. 2 zeigt die gegenständlichen Biegemaschine 1 mit einer weiteren möglichen Ausführungsvariante der Arbeitsbereichs-Bilderfassungsvorrichtung. Zusätzlich ist hier im Arbeits- und Manipulationsraum 10 eine weitere Bilderfassungsvorrichtung 27 angeordnet, welche einen Erfassungsbereich 28 aufweist, der auf den Kopf des Maschinenbedieners 20 ausgerichtet ist. Der Erfassungsbereich 28 ist dabei so groß gewählt, dass die Kopfposition durchschnittlich großer Maschinenbediener 20 im Bereich liegen. Zur Ermittlung der Augenposition ist vorgesehen, dass die weitere Bilderfassungsvorrichtung 27 mit einem Gesichtsfindungsmodul 29 des Bildverarbeitungsprozessors 16 verbunden ist. Mit dieser Ausführung kann die perspektivische Korrektur der Darstellung am bzw. durch das Anzeigemittel 17 deutlich verbessert werden, da neben der Position des Maschinenbedieners 20 im Arbeits- und Manipulationsraum 10, auch noch die Position der Augen bestimmt werden kann. Durch Kenntnis der Position der weiteren Bilderfassungsvorrichtung 27 in Relation zur Biegemaschine 1, kann der Vertikalabstand 30 der Augen des Maschinenbedieners 20 in Bezug zur Grundfläche 31 ermittelt werden und in der perspektivischen Korrektur berücksichtigt werden.

Gemäß einer weiteren vorteilhaften Ausführung kann zusätzlich noch aus der Kenntnis der Augenposition und des Vertikalabstandes 30, ein Blickrichtungsvektor ermittelt werden, um somit die perspektivische Korrektur noch besser bzw. noch genauer an den tatsächlichen reellen Sichtbereich 26 des Maschinenbedieners 20 anzupassen.

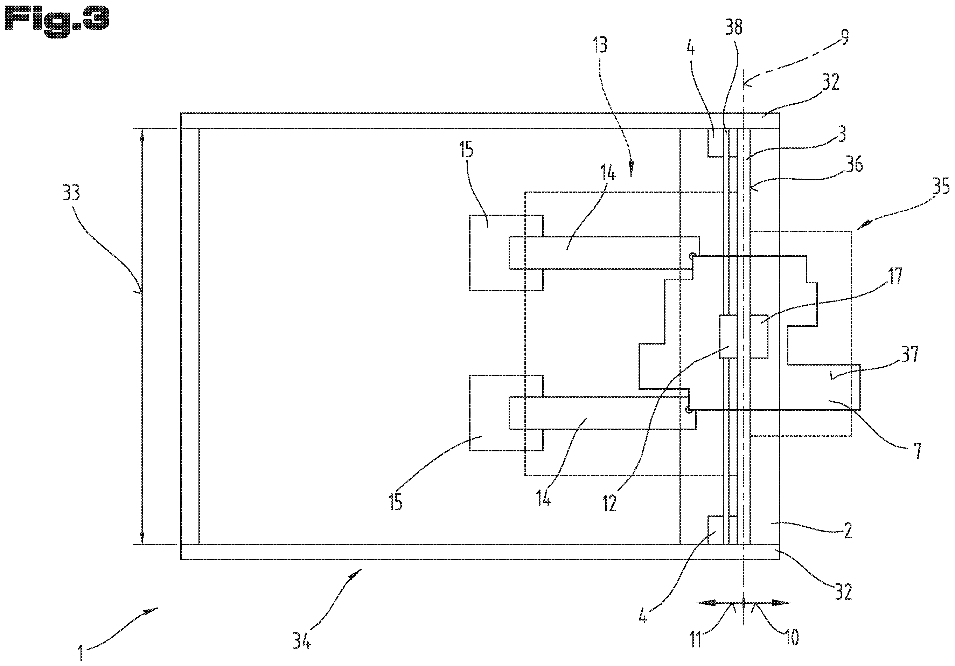

Fig. 3 zeigt eine Draufsicht auf die gegenständliche Biegemaschine 1. Zwei Seitenteile 32 sind durch die Maschinenbreite 33 voneinander distanziert, zwischen diesen ist in Richtung der Längserstreckung der Maschinenbreite 33, der Maschinentisch 2 und der Pressbalken 3 angeordnet, wobei der Pressbalken 3 vom Antriebsmittel 4 relativ zum Maschinenrahmen 34 bewegbar ist. Die Längserstreckung und Bewegungsrichtung des Pressbalkens 3 spannen eine Arbeitsebene 9 auf, welche einen vorderen Arbeits- und Manipulationsraum 10 und einen hinteren, zumeist nicht oder nur schwer einsehbaren Maschinenraum 11 festlegt.

Im Maschinenraum 11 ist ein Hinteranschlag 15 mit einem Anschlagfinger 14 angeordnet, an welchem das umzuformende Blech 7 angelegt und somit für die durchzuführende Biegung korrekt ausgerichtet wird.

Da der hintere Maschinenraum 11, insbesondere die Anschlagfinger 14 vom vor der Biegemaschine 1 stehenden Maschinenbediener 20 zumeist nicht oder nur schwer einsehbar ist (insbesondere durch bücken), ist vorgesehen, dass im Maschinenraum 11 und oberhalb des Maschinentisches 2 eine Bilderfassungsvorrichtung 12 angeordnet ist. Die Bilderfassungsvorrichtung 12 weist dabei einen Erfassungsbereich 13 auf, der zumindest die Anschlagfinger 14 umfasst, insbesondere das das Blech kontaktierende vordere Ende der Anschlagfinger 14.

Von dem Anzeigemittel 17 wird das von der Bilderfassungsvorrichtung 12 erfasste und mittels des Bildverarbeitungsprozessors 16 perspektivisch korrigierte Abbild des Erfassungsbereichs 13, in einem Anzeigebereich 35 dargestellt. Dieser Anzeigebereich 35 ist bevorzugt derart gewählt, dass er die Vorderseite 36 des Pressbalkens und/oder einen Abschnitt der Oberfläche 37 des umzuformenden Bleches 7 umfasst. Ferner ist es auch möglich, dass der Anzeigebereich 35 zum Teil durch den Boden vor der Biegemaschine 1 gebildet wird.

Nach einer Ausführung ist vorgesehen, dass die Bilderfassungsvorrichtung 12 im Maschinenraum 11 und oberhalb des Maschinentisches 2, bevorzugt in etwa in der Mitte der Längserstreckung der Maschinenbreite 33 angeordnet ist. Nach einer weiteren Ausführung ist auch vorgesehen, dass die Bilderfassungsvorrichtung 12 auf einer Manipulationsvorrichtung 38 angeordnet ist, welche Manipulationsvorrichtung 38 zur Bewegung der Bilderfassungsvorrichtung 12 parallel zur Längserstreckung des Pressbalkens 3 und/oder zur Verschwenkung der Bilderfassungsvorrichtung 12 um eine horizontale und/oder vertikale Achse bezüglich des Bodens ausgebildet ist.

Ebenso kann auch das Anzeigemittel 17 auf einer nicht dargestellten Manipulationsvorrichtung angeordnet sein, um ebenfalls parallel zur Längserstreckung des Pressbalkens 3 beweglich bzw. um eine horizontale und/oder vertikale Achse bezüglich des Bodens verschwenkbar zu sein.

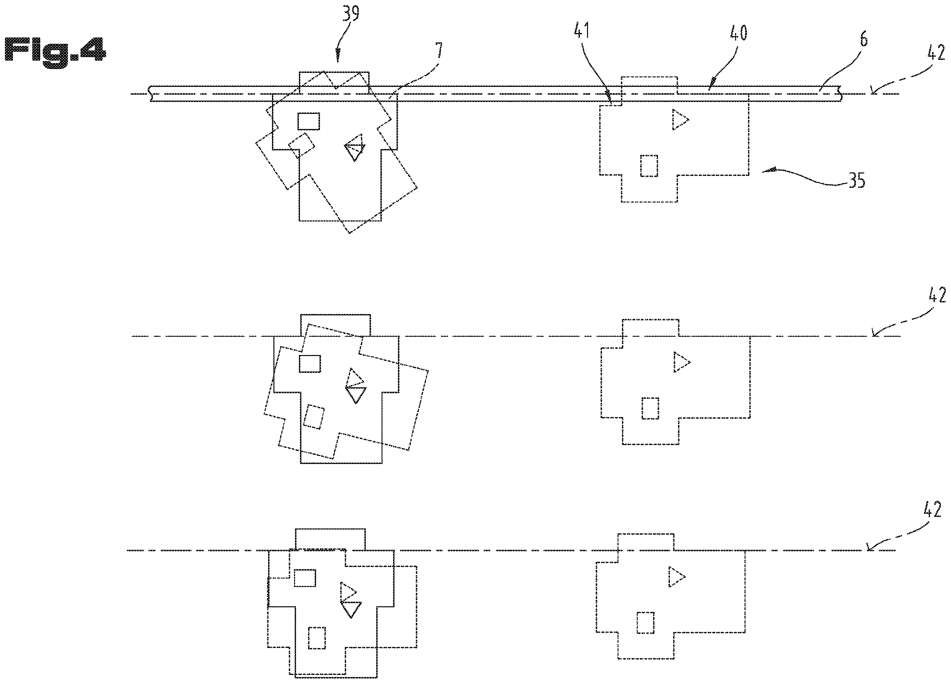

Fig. 4 zeigt einen Abschnitt des Anzeigebereichs 35, insbesondere in Draufsicht auf das umzuformende Blechstück 7, wie sich die Ansicht im Wesentlichen auch für den Maschinenbediener darstellen würde. Dargestellt ist das Blech 7, welches in einer ersten Bearbeitungsposition 39 in der Biegemaschine eingelegt ist, insbesondere am Unterwerkzeug 6 aufgelegt ist, und wie es für den nachfolgenden Bearbeitungsschritt in der zweiten Bearbeitungsposition 40 eingelegt sein soll. Dargestellt ist ferner die Biegelinie 42, um welche das Blech 7 in der ersten Bearbeitungsposition 39 gebogen wurde, und in der zweiten Bearbeitungsposition 40 gebogen werden soll. Vom Bildverarbeitungsprozessor wird die korrekte Soll-Ausrichtung 41 des Bleches in der zweiten Bearbeitungsposition 40 ermittelt und vom Anzeigemittel dargestellt. Nach einer weiteren Ausführung ist es auch möglich, dass die Manipulationshandlungen zum Bewegen des Bleches 7 von der ersten Bearbeitungsposition 39 in die zweite Bearbeitungsposition 40 als Animation dargestellt werden, um die Manipulationsschritte deutlich darstellen zu können. Im dargestellten Fall handelt es sich bei den Manipulationshandlungen um eine simple 90° Drehung nach links. Bei komplexen Biegewerkstücken wird es jedoch auch vorkommen, dass neben Drehungen auch Verschwenkungen erforderlich sind, was insbesondere im Fall einer geringen Stückzahl, bis hin zur Stückzahl 1, das Risiko einer fehlerhaften Manipulation und damit eines fehlerhaft gebogenen Blechstücks birgt. Mit dieser animierten schrittweisen Darstellung kann dem Maschinenbediener eine bedeutende Unterstützung bei der korrekten Zuführung des Blechs zum nächsten Bearbeitungsschritt gegeben werden.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In den Fig. 2-4 sind weitere und gegebenenfalls für sich eigenständige Ausführungsform der Biegemaschine mit einer Arbeitsbereich-Bilderfassungsvorrichtung gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Figuren hingewiesen bzw. Bezug genommen.

Die Ausführungsbeispiele zeigen mögliche Ausführungsvarianten der Biegemaschine mit einer Arbeitsbereich-Bilderfassungsvorrichtung, wobei an dieser Stelle bemerkt sei, dass die Erfindung nicht auf die speziell dargestellten Ausführungsvarianten derselben eingeschränkt ist, sondern der Umfang der Erfindung über die Ansprüche definiert ist.

Der Ordnung halber sei abschließend darauf hingewiesen, dass zum besseren Verständnis des Aufbaus der Biegemaschine mit einer Arbeitsbereich-Bilderfassungsvorrichtung diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Biegemaschine | 29 | Gesichtsfindungsmodul |
| 2 | Maschinentisch | 30 | Vertikalabstand |
| 3 | Pressbalken | 31 | Boden, Grundfläche |
| 4 | Antriebsmittel | 32 | Seitenteile |
| 5 | Maschinensteuerung | 33 | Maschinenbreite |
| 6 | Unterwerkzeug | 34 | Maschinenrahmen |
| 7 | Blech | 35 | Anzeigebereich |
| 8 | Bewegungsrichtung | 36 | Vorderseite |
| 9 | Arbeitsebene | 37 | Oberfläche, Flachseite |
| 10 | Arbeits- und Manipulationsraum | 38 | Manipulationsvorrichtung |
| 11 | Maschinenraum | 39 | erste Bearbeitungsposition |
| 12 | Bilderfassungsvorrichtung | 40 | zweite Bearbeitungsposition |
| 13 | Erfassungsbereich | 41 | Soll-Ausrichtung |
| 14 | Anschlagfinger | 42 | Biegelinie |
| 15 | Hinteranschlag | | |
| 16 | Bildverarbeitungsprozessor | | |
| 17 | Anzeigemittel | | |
| 18 | Koordinatentransformations-Modul | | |
| 19 | Positionsermittlungssystem | | |
| 20 | Maschinenbediener | | |
| 21 | Mobilteil | | |
| 22 | erste Gegenstelle | | |
| 23 | zweite Gegenstelle | | |
| 24 | Hochfrequenz-Kommunikationsverbindung | | |
| 25 | Ultraschall-Signalverbindung | | |
| 26 | Sichtbereich | | |
| 27 | weitere Bilderfassungsvorrichtung | | |
| 28 | Erfassungsbereich | | |

## Patentansprüche

1. Biegemaschine (1) mit einer Arbeitsbereich-Bilderfassungsvorrichtung,
wobei die Biegemaschine (1) einen Maschinenrahmen (34),
einen längserstreckten, feststehenden Maschinentisch (2)
und einen längserstreckten Pressbalken (3) aufweist, welcher Pressbalken (3) im Maschinenrahmen (34) geführt und von einem Antriebsmittel (4) relativ zu diesem beweglich aufgenommen ist, welches Antriebsmittel (4) von einer Maschinensteuerung (5) angesteuert wird,
und wobei der Maschinenrahmen (34) ferner zwei Seitenteile (32) aufweist, welche in Richtung der Längserstreckung des Maschinentisches (2) durch eine Maschinenbreite (33) voneinander distanziert sind,
und wobei die Längserstreckung und die Bewegungsrichtung (8) des Pressbalkens (3) eine Arbeitsebene (9) aufspannen,
und die Arbeitsebene (9) einen vorderen Arbeits- und Manipulationsraum (10) und einen davon abgegrenzten, und insbesondere abgeschlossenen, hinteren Maschinenraum (11) festlegt, und wobei im Maschinenraum (11) oberhalb des Maschinentisches (2) eine Bilderfassungsvorrichtung (12) angeordnet ist, wobei ein Erfassungsbereich (13) der Bilderfassungsvorrichtung (12) in Richtung des Maschinenraums (11) ausgerichtet ist,
und wobei die Bilderfassungsvorrichtung (12) mit einem Anzeigemittel (17) verbunden ist, welches zur Darstellung des erfassten Abbilds des Erfassungsbereichs (13) ausgebildet ist, **dadurch gekennzeichnet, dass**
die Bilderfassungsvorrichtung (12) über einen Bildverarbeitungsprozessor (16) mit dem Anzeigemittel (17) verbunden ist, und dass
der Bildverarbeitungsprozessor (16) ein Koordinatentransformations-Modul (18) aufweist, welches zur Korrektur der Perspektive des erfassten Abbilds ausgebildet ist, und
dass das Koordinatentransformations-Modul (18) mit einem drahtlosen Positionsermittlungssystem (19) verbunden ist, welches dazu ausgebildet ist, die Position eines Maschinenbedieners (20) im Arbeits- und Manipulationsraum (10) zu ermitteln.

2. Biegemaschine nach Anspruch 1, **dadurch gekennzeichnet, dass** die Bilderfassungsvorrichtung (12) durch zumindest eine 2D- oder eine 3D-Kamera gebildet ist.

3. Biegemaschine nach einem der Ansprüche 1 oder 2, **dadurch gekennzeichnet, dass** das Positionsermittlungssystem (19) einen vom Maschinenbediener (20) mitgeführten Mobilteil (21) und eine an der Biegemaschine (1) angeordnete erste Gegenstelle (22) aufweist, wobei zwischen dem Mobilteil (21) und der ersten Gegenstelle (22) eine drahtlose Hochfrequenz-Kommunikationsverbindung (24) besteht
und dass die Biegemaschine (1) zumindest eine zweite Gegenstelle (23) aufweist, wobei zwischen dem Mobilteil (21) und der zumindest einen zweiten Gegenstelle eine drahtlose Ultraschall-Signalverbindung (25) besteht.

4. Biegemaschine nach einem der Ansprüche 1 bis 3, **dadurch gekennzeichnet, dass** die Bilderfassungsvorrichtung (12) in einem Mittenabschnitt der Längserstreckung des Pressbalkens (3), oder im Bereich zumindest eines der Seitenteile (32) angeordnet ist.

5. Biegemaschine nach einem der Ansprüche 1 bis 4, **dadurch gekennzeichnet, dass** in einem Speichermittel des Bildverarbeitungsprozessors (16), oder in einem, mit dem Bildverarbeitungsprozessor (16) verbundenem externen Speichermittel, ein grafisches Modell der Biegemaschine (1) hinterlegt ist, welches der Bildverarbeitungsprozessor (16) am Anzeigemittel (17) dem erfassten Abbild überlagert darstellt.

6. Biegemaschine nach einem der Ansprüche 1 bis 5, **dadurch gekennzeichnet, dass** im Arbeits- und Manipulationsraum (10) eine, mit dem Bildverarbeitungsprozessor (16) verbundene, weitere Bilderfassungsvorrichtung (27) angeordnet ist, welche einen Erfassungsbereich (28) aufweist, der auf den Bereich der Kopfhöhe eines Maschinenbedieners (20) ausgerichtet ist,
und wobei die weitere Bilderfassungsvorrichtung (27) mit einem Gesichtsfindungsmodul (29) des Bildverarbeitungsprozessors (16) verbunden ist.

7. Biegemaschine nach einem der Ansprüche 1 bis 6, **dadurch gekennzeichnet, dass** das Anzeigemittel (17) durch einen Projektor gebildet ist, wobei der Projektionsbereich auf eine Vorderseite (36) der Biegemaschine (1) ausgerichtet ist, insbesondere auf den Pressbalken (3) bzw. eine Verkleidung des Pressbalkens (3), oder/oder dass der Projektionsbereich auf einen Abschnitt der Oberfläche (37) des umzuformenden Bleches (7) ausgerichtet ist.

8. Biegemaschine nach einem der Ansprüche 1 bis 6, **dadurch gekennzeichnet, dass** das Anzeigemittel (17) durch eine Datenbrille gebildet ist.

9. Biegemaschine nach den Ansprüchen 3 und 8, **dadurch gekennzeichnet, dass** der Mobilteil (21) durch die Datenbrille gebildet ist.

10. Biegemaschine nach einem der Ansprüche 1 bis 9, **dadurch gekennzeichnet, dass** die Bilderfassungsvorrichtung (12) auf einer Manipulationsvorrichtung (38) angeordnet ist, welche zur Veränderung der Position der Bilderfassungsvorrichtung (12) parallel zur Längserstreckung ausgebildet ist und/oder
zur Verschwenkung der Bilderfassungsvorrichtung (12) um eine vertikale und/oder horizontale Achse ausgebildet ist.

11. Biegemaschine nach einem der Ansprüche 1 bis 10, **dadurch gekennzeichnet, dass** das drahtlose Positionsermittlungssystem (19) einen Beschleunigungssensor, oder eine kontaktlos auslesbare Erkennungsmarke aufweist.

12. Biegemaschine nach einem der Ansprüche 1 bis 11, **dadurch gekennzeichnet, dass** das Anzeigemittel (17) durch einen Flachbildschirm gebildet ist, welcher am Pressbalken (3) angeordnet ist, insbesondere an der Vorderseite (36).

13. Biegemaschine nach Anspruch 12, **dadurch gekennzeichnet, dass** der Flachbildschirm in einer Montagevorrichtung angeordnet ist, welche Montagevorrichtung eine Positionierung des Flachbildschirms entlang der Längserstreckung des Pressbalkens (3) ermöglicht.

14. Verfahren zur Verbesserung der Bediensicherheit einer Biegemaschine (1), ausgeführt auf einer Biegemaschine (1) nach einem der Ansprüche 1 bis 13, **dadurch gekennzeichnet, dass**
• in Echtzeit;
• von der Bilderfassungsvorrichtung (12) ein hinteres Abbild des Maschinenraums (11) erfasst wird; und dass
• vom Positionsermittlungssystem (19) die Koordinaten eines Maschinenbedieners (20) im Arbeits- und Manipulationsraum (10) ermittelt werden; und dass
• vom Koordinatentransformations-Modul (18) ein Transformationsvektor zwischen der Bilderfassungsvorrichtung (12) und den Koordinaten des Maschinenbedieners (20) ermittelt wird; und dass
• vom Bildverarbeitungsprozessor (16) das erfasste Abbild unter Anwendung des Transformationsvektors perspektivisch transformiert wird; und dass
• das transformierte Bild am Anzeigemittel (17) dargestellt wird.

15. Verfahren nach Anspruch 14, **dadurch gekennzeichnet, dass** von der weiteren Bilderfassungsvorrichtung ein vorderes Abbild erfasst wird, in welchem vorderen Abbild vom Gesichtsfindungsmodul (29) das Gesicht des Bedieners ermittelt wird, insbesondere die Position der Augen.

16. Verfahren nach Anspruch 15, **dadurch gekennzeichnet, dass** vom Koordinatentransformations-Modul (18) aus der Position der Augen ein Blickrichtungsvektor ermittelt wird, welcher vom Bildverarbeitungsprozessor (16) zusammen mit dem Transformationsvektor zur perspektivischen Transformation verwendet wird.

17. Verfahren nach den Ansprüchen 15 oder 16, **dadurch gekennzeichnet, dass** vom Koordinatentransformations-Modul (18) aus der Position der Augen und einer Anordnungsposition des weiteren Bilderfassungsmittels, ein Vertikalabstand (30) zwischen Boden (31) und Augenposition ermittelt wird, welcher vom Bildverarbeitungsprozessor (16) zusammen mit dem Transformationsvektor zur perspektivischen Transformation verwendet wird.

18. Verfahren nach einem der Ansprüche 14 bis 16, **dadurch gekennzeichnet, dass** der Bildverarbeitungsprozessor (16) eine im Speichermittel oder im externen Speichermittel hinterlegte Soll-Ausrichtung am Anzeigemittel (17) darstellt und/oder auf einem in der Biegemaschine (1) eingelegten Blech (7) darstellt.

19. Verfahren nach einem der Ansprüche 14 oder 15, **dadurch gekennzeichnet, dass** der Bildverarbeitungsprozessor (16) ein Mustererkennungs-Modul aufweist, welches im vorderen und/oder im hinteren Abbild die Ausrichtung eines eingelegten Bleches (7) als Ist-Ausrichtung erfasst, insbesondere die Umrisse des Bleches (7), und durch Vergleich mit einer, im Speichermittel oder im externen Speichermittel hinterlegten Soll-Ausrichtung, einen Ausrichtungs-Abweichungsvektor ermittelt, und diesen als Korrekturdarstellung am Anzeigemittel (17) und/oder am eingelegten Blech (7) darstellt.

20. Verfahren nach Anspruch 19, **dadurch gekennzeichnet, dass** die Korrekturdarstellung vom Bildverarbeitungsprozessor (16) als Animation erzeugt wird.

## Claims

1. A bending machine (1) with a work area image capture apparatus,
wherein the bending machine (1) has a machine frame (34),
a longitudinally extended machine table (2) fixed in place,
and a longitudinally extended press beam (3), which press beam (3) is guided in the machine frame (34) and held by a drive means (4), so as to be movable relative to the latter, which drive means (4) is controlled by a machine controller (5),
and wherein the machine frame (34) furthermore has two side parts (32), which are spaced apart from one another by a machine width (33) in the direction of the longitudinal extension of the machine table (2),
and wherein the longitudinal extension and the direction of movement (8) of the press beam (3) define a working plane (9),
and the working plane (9) establishes a front working and manipulation space (10) and a rear machine space (11), which is delimited, in particular closed off, from the former and,
and wherein an image capturing device (12) is arranged in the machine space (11) above the machine table (2), wherein a capturing region (13) of the image capturing device (12) is oriented in the direction of the machine space (11),
and wherein the image capturing device (12) is connected with a display means (17), which is configured for presentation of the captured image of the capturing region (13), **characterized in that**
the image capturing device (12) is connected with a display means (17) via an image processing processor (16), and that
the image processing processor (16) has a coordinate transformation module (18) which is configured for correction of the perspective of the captured image, and
that the coordinate transformation module (18) is connected with a wireless position determination system (19), which is configured for determining the position of a machine operator (20) in the working and manipulation space (10).

2. The bending machine according to claim 1, **characterized in that** the image capturing device (12) is formed by at least one 2D or one 3D camera.

3. The bending machine according to one of claims 1 or 2, **characterized in that** the position determination system (19) has a handset (21) carried by the machine operator (20) and a first remote station (22) arranged on the bending machine (1), wherein a wireless high-frequency communication connection (24) exists between the handset (21) and the first remote station (22),
and that the bending machine (1) has at least a second remote station (23), wherein a wireless ultrasound signal connection (25) exists between the handset (21) and the at least one second remote station.

4. The bending machine according to one of claims 1 to 3, **characterized in that** the image capturing device (12) is arranged in a center section of the longitudinal extension of the press beam (3) or in the region of at least one of the side parts (32).

5. The bending machine according to one of claims 1 to 4, **characterized in that** a graphic model of the bending machine (1) is stored in a storage means of the image processing processor (16) or in an external storage means connected with the image processing processor (16), which model the image processing processor (16) shows on the display means (17), superimposed on the captured image.

6. The bending machine according to one of claims 1 to 5, **characterized in that** a further image capturing device (27) connected with the image processing processor (16) is arranged in the working and manipulation space (10), which device has a capturing region (28) that is aimed at the area of the height of the head of a machine operator (20), and wherein the further image capturing device (27) is connected with a face-finding module (29) of the image processing processor (16).

7. The bending machine according to one of claims 1 to 6, **characterized in that** the display means (17) is formed by a projector, wherein the projection region is aimed at a front side (36) of the bending machine (1), particularly at the press beam (3) and/or a casing of the press beam (3), and/or that the projection region is aimed at a section of the surface (37) of the metal sheet (7) to be formed.

8. The bending machine according to one of claims 1 to 6, **characterized in that** the display means (17) is formed by data glasses.

9. The bending machine according to one of claims 3 and 8, **characterized in that** the handset (21) is formed by the data glasses.

10. The bending machine according to one of claims 1 to 9, **characterized in that** the image capturing device (12) is arranged on a manipulation device (38) that is configured to change the position of the image capturing device (12) parallel to the longitudinal extension and/or
is configured to pivot the image capturing device (12) about a vertical and/or horizontal axis.

11. The bending machine according to one of claims 1 to 10, **characterized in that** the wireless position determination system (19) has an acceleration sensor or an identifier that is readable in contactless manner.

12. The bending machine according to one of claims 1 to 11, **characterized in that** the display means (17) is formed by a flat screen that is arranged on the press beam (3), in particular on the front side (36).

13. The bending machine according to claim 12, **characterized in that** the flat screen is arranged in an installation device, which installation device allows positioning of the flat screen along the longitudinal extension of the press beam (3).

14. A method for improving the operating safety of a bending machine (1), carried out on a bending machine (1) according to one of claims 1 to 13, **characterized in that**
• in real time;
• a rear image of the machine space (11) is captured by the image capturing device (12), and that
• the coordinates of a machine operator (20) in the working and manipulation space (10) are determined by the position determination system (19); and that
• a transformation vector between the image capturing device (12) and the coordinates of the machine operator (20) is determined by the coordinate transformation module (18); and that
• the captured image is transformed in perspective by the image processing processor (16), using the transformation vector; and that
• the transformed image is shown on the display means (17).

15. The method according to claim 14, **characterized in that** a front image is captured by the further image capturing device, in which front image the face of the operator, in particular the position of the eyes, is determined by the face-finding module (29).

16. The method according to claim 15, **characterized in that** a viewing direction vector is determined by the coordinate transformation module (18) from the position of the eyes, which vector is used by the image processing processor (16) together with the transformation vector for perspective transformation.

17. The method according to claims 15 or 16, **characterized in that** a vertical distance (30) between floor (31) and eye position is determined by the coordinate transformation module (18) from the position of the eyes and a placement position of the further image capturing means, which distance is used by the image processing processor (16) for perspective transformation, together with the transformation vector.

18. The method according to one of claims 14 to 16, **characterized in that** the image processing processor (16) shows a target orientation stored in the storage means or in the external storage means on the display means (17) and/or on a metal sheet (7) inserted into the bending machine (1).

19. The method according to one of claims 14 or 15, **characterized in that** the image processing processor (16) has a pattern recognition module that captures the orientation of an inserted metal sheet (7), in particular the outlines of the metal sheet (7), as the actual orientation in the front and/or rear image, and determines an orientation deviation vector by comparison with a target orientation stored in the storage means or in the external storage means, and shows this vector on the display means (17) and/or on the inserted metal sheet (7) as a correction presentation.

20. The method according to claim 19, **characterized in that** the correction presentation is generated by the image processing processor (16) as an animation.

## Revendications

1. Machine de pliage (1) avec un dispositif d'acquisition d'images de la zone de travail, dans laquelle la machine de pliage (1) comprend
un cadre de machine (34),
une table de machine (2) allongée et fixe,
et une barre de pression (3) allongée, cette barre de pression (3) étant guidée dans le cadre de machine (34) et étant logé de manière mobile par rapport à celui-ci par un moyen d'entraînement (4), ce moyen d'entraînement (4) étant contrôlé par une commande de machine (5),
et dans laquelle le cadre de machine (34) comprend en outre deux parties latérales (32) qui sont distantes l'une de l'autre dans la direction de l'extension longitudinale de la table de machine (2) d'une largeur de machine (33),
et dans laquelle l'extension longitudinale et la direction de déplacement (8) de la barre de pression (3) définissent un plan de travail (9),
et le plan de travail (9) définit un espace de travail et de manipulation avant (10) et un espace de machine arrière (11) délimité et plus particulièrement fermé par celui-ci,
et dans laquelle, dans l'espace de machine (11), au-dessus de la table de machine (2), est disposé un dispositif d'acquisition d'images (12), dans lequel une zone d'acquisition (13) du dispositif d'acquisition d'images (12) est orientée en direction de l'espace de machine (11),
et dans laquelle le dispositif d'acquisition d'images (12) est relié avec un moyen d'affichage (17) qui est conçu pour la représentation de l'image acquise de la zone d'acquisition (13),
**caractérisée en ce que**
le dispositif d'acquisition d'images (12) est relié avec le moyen d'affichage (17) par l'intermédiaire d'un processeur de traitement d'images (16) et **en ce que**
le processeur de traitement d'images (16) comprend un module de transformation de coordonnées (18) qui est conçu pour la correction de la perspective de l'image acquise et
le module de transformation de coordonnées (18) est relié avec un systématiquement de positionnement sans fil (19) qui est conçu pour déterminer la position d'un opérateur de machine (20) dans l'espace de travail et de manipulation (10).

2. Machine de pliage selon la revendication 1, **caractérisée en ce que** le dispositif d'acquisition d'images (12) est constitué d'au moins une caméra 2D ou 3D.

3. Machine de pliage selon l'une des revendications 1 ou 2, **caractérisée en ce que** le système de positionnement (19) comprend une partie mobile (21) entraînée par l'opérateur de la machine (20) et un premier terminal (22) disposé sur la machine de pliage (1), dans lequel, entre la partie mobile (21) et le premier terminal (22), il existe une liaison de communication haute fréquence sans fil (24),
et **en ce que** la machine de pliage (1) comprend au moins un deuxième terminal (23), dans lequel, entre la partie mobile (21) et l'au moins un deuxième terminal, il existe une liaison de communication par ultrasons sans fil (25).

4. Machine de pliage selon l'une des revendications 1 à 3, **caractérisée en ce que** le dispositif d'acquisition d'images (12) est disposé dans une portion centrale de l'extension longitudinale de la barre de pression (3) ou au niveau d'au moins une des parties latérales (32).

5. Machine de pliage selon l'une des revendications 1 à 4, **caractérisée en ce que**, dans une mémoire du processeur de traitement d'images (16) ou dans une mémoire externe reliée avec le processeur de traitement d'images (16), est enregistré un modèle graphique de la machine de pliage (1) que le processeur de traitement d'images (16) représente sur le moyen d'affichage (17) de manière superposée à l'image acquise.

6. Machine de pliage selon l'une des revendications 1 à 5, **caractérisée en ce que**, dans l'espace de travail et de manipulation (10), est disposé un autre dispositif d'acquisition d'images (27) relié avec le processeur de traitement d'images (16), qui comprend une zone d'acquisition (28) qui est orientée vers la zone de la hauteur de tête d'un opérateur de la machine (20),
et dans laquelle l'autre dispositif d'acquisition d'images (27) est relié avec un module de détection de visage (29) du processeur de traitement d'images (16).

7. Machine de pliage selon l'une des revendications 1 à 6, **caractérisée en ce que** le moyen d'affichage (17) est constitué d'un projecteur, dans lequel la zone de projection est orientée vers un côté avant (36) de la machine de pliage (1), plus particulièrement vers la barre de pression (3) resp. un carénage de la barre de pression (3) et/ou **en ce que** la zone de projection est orientée vers une portion de la surface (37) de la tôle à former (7).

8. Machine de pliage selon l'une des revendications 1 à 6, **caractérisée en ce que** le moyen d'affichage (17) est constitué d'une paire de lunettes de données.

9. Machine de pliage selon l'une des revendications 3 et 8, **caractérisée en ce que** la partie mobile (21) est constituée de la paire de lunettes de données.

10. Machine de pliage selon l'une des revendications 1 à 9, **caractérisée en ce que** le dispositif d'acquisition d'images (12) est disposé sur un dispositif de manipulation (38) qui est conçu pour modifier la position du dispositif d'acquisition d'images (12) parallèlement à l'extension longitudinale et/ou
conçu pour le pivotement du dispositif d'acquisition d'images (12) autour d'un axe vertical et/ou horizontal.

11. Machine de pliage selon l'une des revendications 1 à 10, **caractérisée en ce que** le système de positionnement sans fil (19) comprend un capteur d'accélération ou un repère de détection lisible sans contact.

12. Machine de pliage selon l'une des revendications 1 à 11, **caractérisée en ce que** le moyen d'affichage (17) est constitué d'un écran plat qui est disposé sur la barre de pression (3), plus particulièrement sur le côté avant (36).

13. Machine de pliage selon la revendication 12, **caractérisée en ce que** l'écran plat est disposé dans un dispositif de montage, ce dispositif de montage permettant un positionnement de l'écran plat le long de l'extension longitudinale de la barre de pression (3).

14. Procédé pour l'amélioration de la sécurité de fonctionnement d'une machine de pliage (1), exécuté sur une machine de pliage (1) selon l'une des revendications 1 à 13, **caractérisé en ce que**
• en temps réel ;
• une image arrière de l'espace de machine (11) est acquise par le dispositif d'acquisition d'images (12) ; et **en ce que**
• les coordonnées d'un opérateur de machine (20) dans l'espace de travail et de manipulation (10) sont déterminées par le système de positionnement (19) ; et **en ce que**
• un vecteur de transformation entre le dispositif d'acquisition d'images (12) et les coordonnées de l'opérateur de machine (20) est déterminé par le module de transformation de coordonnées (18) ; et **en ce que**
• l'image acquise est transformée en ce qui concerne la perspective par le processeur de traitement d'images (16) à l'aide du vecteur de transformation ; et **en ce que**
• l'image transformée est représentée sur le moyen d'affichage (17).

15. Procédé selon la revendication 14, **caractérisé en ce qu'**une image avant est acquise par l'autre dispositif d'acquisition d'images, le visage de l'opérateur, plus particulièrement la position des yeux, étant déterminée dans cette image avant par le module de détection de visage (29).

16. Procédé selon la revendication 15, **caractérisé en ce qu'**un vecteur de direction du regard est déterminé par le module de transformation de coordonnées (18) à partir de la position des yeux, ce vecteur étant utilisé par le processeur de traitement d'images (16) conjointement avec le vecteur de transformation pour une transformation de la perspective.

17. Procédé selon l'une des revendications 15 ou 16, **caractérisé en ce qu'**une distance verticale (30) entre le sol (31) et la position des yeux est déterminée par le module de transformation des coordonnées (18) à partir de la position des yeux et une position de disposition de l'autre moyen d'acquisition d'images, cette distance étant utilisée par le processeur de traitement d'images (16) conjointement avec le vecteur de transformation pour une transformation de la perspective.

18. Procédé selon l'une des revendications 14 à 16, **caractérisé en ce que** le processeur de traitement d'images (16) représente une orientation de consigne enregistrée dans la mémoire ou dans la mémoire externe sur le moyen d'affichage (17) et/ou sur une tôle (7) insérée dans la machine de pliage (1).

19. Procédé selon l'une des revendications 14 ou 15, **caractérisé en ce que** le processeur de traitement d'images (16) comprend un module de reconnaissance de motif qui détecte, dans l'image avant et/ou dans l'image arrière, l'orientation d'une tôle insérée (7) en tant qu'orientation effective, plus particulièrement les contours de la tôle (7) et, par comparaison avec une orientation de consigne enregistrée dans la mémoire ou dans la mémoire externe, détermine un vecteur d'écart d'orientation et représente celui-ci en tant que représentation de correction sur le moyen d'affichage (17) et/ou sur la tôle (7) insérée.

20. Procédé selon la revendication 19, **caractérisé en ce que** la représentation de correction est générée sous la forme d'une animation par le processeur de traitement d'images (16).
